# EUROPEAN PATENT APPLICATION

(11) **EP 1 178 401 A2**
(43) Date of publication of application: **06.02.2002**
(21) Application number: 01306518.0
(22) Date of filing: 30.07.2001
(51) Int. Cl.: G06F 9/44

(54) **Method and system for information development and access**

(30) Priority: 02.08.2000 GB 0018839
(71) Applicant: The Salamander Organisation Ltd., York, YO10 5DG (GB)
(72) Inventor: Smith, Simon, Easingwold, York YO61 3BD (GB); Edwards, Bernard, Crowthorne, Berkshire RG45 6AR (GB)
(74) Representative: Wood, Graham

(57) **Abstract**

The present invention relates to a method and apparatus for constructing and utilising a process-driven "knowledge activation" system, and more particularly to a method for the development and use of business process models for distribution through electronic media such as web browsers, and the provision of access to relevant managed knowledge resources at appropriate points within said models. The system includes the provision of a number of interlinked elements at least one of which is selectable from a graphical representation of the model and at least one of the elements is provided with links to a number of resources required for completion of the element, said resources indicated graphically to the user upon the selection of the appropriate element.

## Description

The present invention relates to a method and apparatus for constructing a process-driven "knowledge activation" system, and more particularly to a method for the development and use of business process models for distribution through electronic media such as web browsers, and the provision of access to relevant managed knowledge resources at appropriate points within said models.

Process models are increasingly used to define best practice within a business and to communicate this to those associated with the business, with the potential benefit of enhanced business performance and the reduction in risk of failures of adherence to best practise, whether that best practise is defined within the organisation or by a regulatory body.

Alongside process models describing best practice processes and the resources that these require in order to be delivered, businesses will evolve a body of documentation, guidelines, policies and rules concerning the delivery of said processes. This body constitutes the organisation's knowledge resource that distinguishes its delivery of a process from another organisation's delivery of the same process. We coin the term knowledge activation to describe the linkage of resources as described within a process model to their counterparts within this body of organisational knowledge.

Prior art is cited in the area of business process modelling. This work gives the ability to describe process, and describe the knowledge resource requirements of a business, but gives no managed linkage, via the processes that make the organisation work, to the knowledge resources created around an organisation. Prior art can also be cited in the area of document management that provides mechanisms for the storage, cataloguing and retrieval of electronic resources, but carried out with no process context.

Two key improvements in this area offered by said activation are the tailoring of a business process model more closely to the way in which the business delivers its processes, and the access to said resources at the points in a process where they are required by people following said process.

According to the present invention there is provided a method for creating a process-driven knowledge activation system, said method comprising the following steps:
- creating a process model of a system comprising one or more elements being part of a general purpose graphical business model, said model accessible via a web browser
- associating at points within processes in said model a collection of symbols representing the resources that will be required by its user to be effective, the usage of said symbols across the model being auditable and traceable through a mechanism of dependency analysis within the modelling tool
- mapping said symbols to electronic resources stored in a file store
- generating a process-driven knowledge activation system comprising said one or more symbols or named links associated with said processes linked to said resources
said system revealing to the user, on selecting an element or process, the associated resource symbols, the appropriate resource then being presented to the user on the selective selection of said symbols or links.

In one embodiment the process model is part of a set of general purpose graphical business models and the process model can be accessible via a web browser.

In one embodiment the one or more elements of the process model are provided in a tool which uniquely identifies each element and maps each element to the one or more resources, also referred to herein as knowledge resources. Typically the one or more knowledge resources can be in the form of arbitrary alternative web pages and/or web-accessible resources and can be accessed by the user selection of one or more of the process model symbols or links.

Preferably the process model is illustrated on a display screen and the elements can be selected by any conventional PC based user control system.

In one embodiment the knowledge resource symbols can be queried within a tool to ascertain for each the set of processes with a requirement on said symbol's corresponding resource, so facilitating a process of resource change management.

In one embodiment the knowledge resources are accessed by the user selection of one or more of the symbols representing these resources from within a process model or definition. Typically the process model or definition is illustrated on a display screen and the elements can be selected by any conventional user control system such as mouse, keyboard etc. (and in the future - voice) and when an element is selected an appropriate display is generated for any associated knowledge resource.

In use, a modeller/user follows the method described above to create a set of general purpose graphical business models containing various linked elements in a tool, said tool able to generate models which are accessible via a web browser and which links the knowledge resource symbols in the browser by uniquely identifying each element and corresponding knowledge resource. The preferred embodiment of the invention, maps knowledge resource symbols (associated with a process that requires them) to their corresponding knowledge resources using a mechanism based on that described in the applicant's co-pending patent application for Process-Driven Information Systems.

The advantage of the present invention is that it provides a method for creating a process driven knowledge activation system that can communicate and disseminate arbitrary business intent, additionally providing access to a managed body of organisational knowledge resources at appropriate points in the process models describing said intent. The method allows non-technical users to rapidly create process models that describe the working of an organisation. The models can be used to access the resources that said users and others create in the course of their business work, and that characterise the delivery of said processes by that organisation.

According to a further aspect of the invention there is provided a business model, said model comprising a number of process model elements which in conjunction represent the business model and characterised in that at least one of the elements is linked to a number of resources which can be selectively accessed by a user of the model and said resources linked to a particular element are made available to the user following the user choosing the particular element.

In one embodiment the business model is displayed on a display screen and the user can interact with said model using a suitable control tool such as a computer mouse to select one or a number of the elements which make up the model. Upon selection, if there are any resources linked thereto in the model, the same are represented on the display screen and thereafter selectable by the user.

Upon selection of a resource the business model accesses the same and makes the same available for use by the user.

Thus in one embodiment, improved business model usage is provided to the user by the user clicking at an element or process in the organisational model, said click revealing the knowledge resources available or required at that element in the model. Each resource can be presented to the user through a click on a symbol or named link that represents a specific required resource, followed by the delivery of said resource to said user.

Moreover, the model includes a mechanism whereby the distributed and evolutionary aspects of the organisation's knowledge resources can be hidden from the users of said resources through the mechanism of accessing resources from their representation within said process models or their definitions, rather than directly through a file store.

Furthermore, said activation provides the traceability of the usage of knowledge resources throughout the organisation as an aid to knowledge resource management and auditability.

Typically, there is provided a model as herein described which is graphically represented on a display screen and including a series of model elements and a series of resources, said resources, or representations thereof linked to elements and revealed to the user upon the user selecting an element, the associated resources then presented to the user for selection, and, upon selection, accessible to the user.

Specific embodiments of the invention will now be described with reference to the accompanying Figures wherein:
Figure 1 represents an embodiment of the architecture of the apparatus of the present invention;
Figure 2 shows a screen display of a definition window for the business model process 'Engage with Customer' in accordance with the invention;
Figure 3 shows a screen display of the 'Engage with Customer; process utilising a process model in accordance with the invention;
Figure 4 shows a screen display of the 'Receive and Record Request' process; and
Figure 5 shows a screen display of the collection of knowledge resources as defined in the invention.

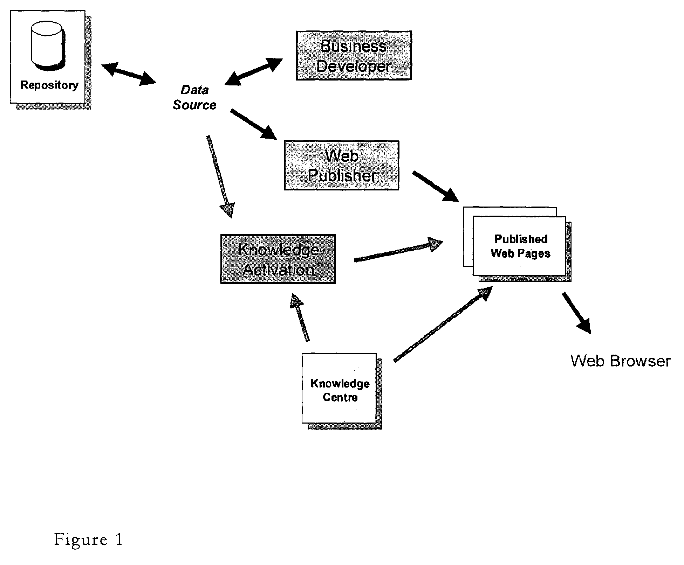

In Figure 1 a Repository is accessed through a data source name by the modelling tool Business Developer, with which process models and modelling elements representing knowledge resources are created and associated. The publishing tool Web Publisher creates a set of web pages for these models. The activation tool Knowledge Activation links resources from the Knowledge Centre (an electronic library of knowledge resources mapped to by the symbolic knowledge resources elements held within the Repository) to the web pages for process models that have been defined in Business Developer to require these resources. A web browser is used to browse process models and gain access to the sets of resources associated with each process;

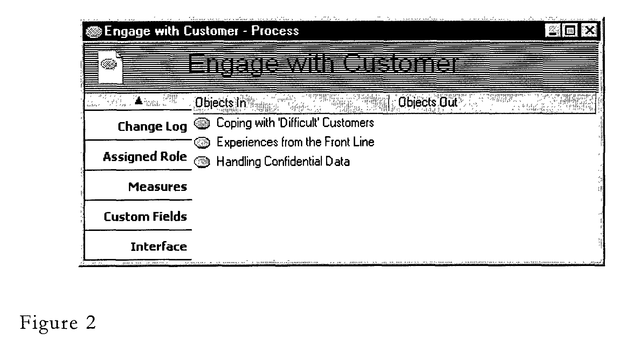

In Figure 2 there is shown a screen display of a definition window for the process 'Engage with Customer' developed using a process modelling tool, "MooD Business Developer", to which symbols representing knowledge resources have been added and which comprises three elements.

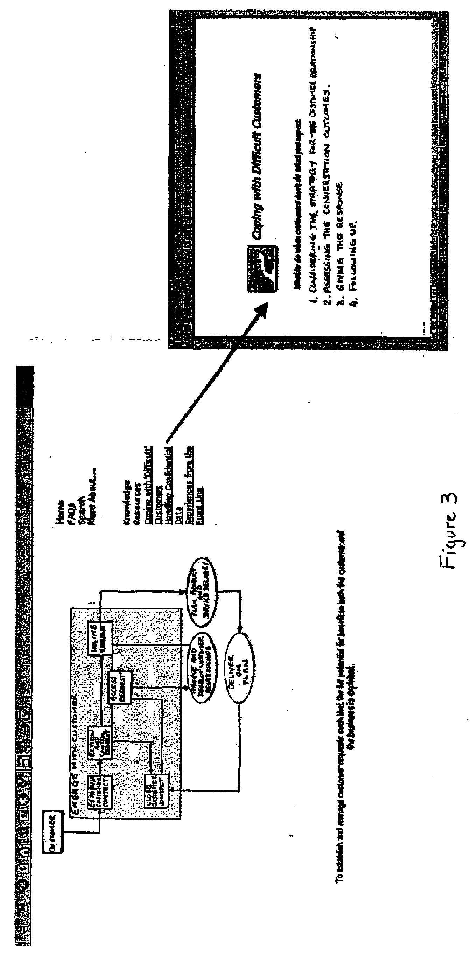

Figure 3 shows a screen display of the 'Engage with Customer; process utilising a process model in accordance with the invention, complete with a generated graphical link to a number of the resources defined in the process modelling tool, along with a figurative illustration, indicated by the arrow of the effect of a click or selection on said links and the change in graphical display.

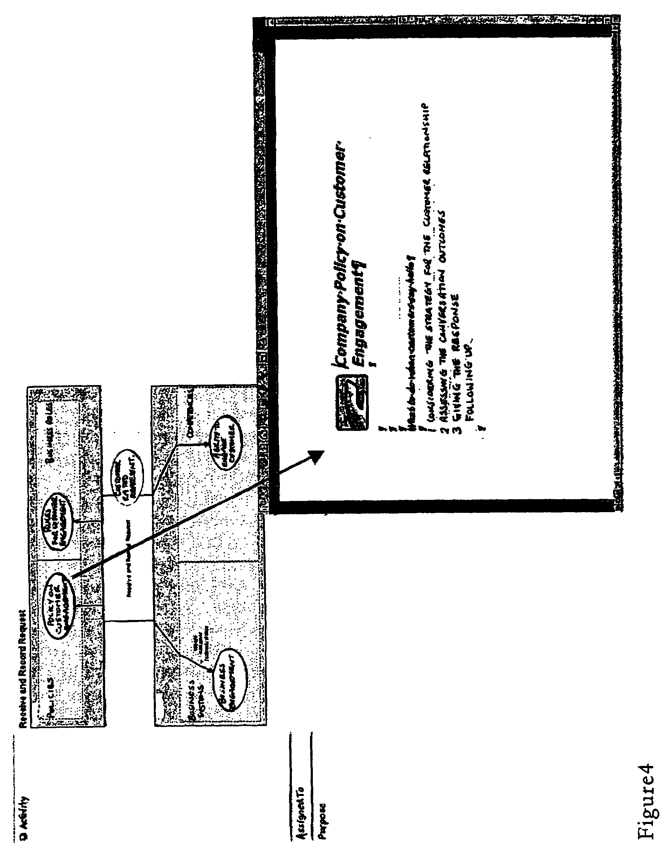

Figure 4 shows a screen display of the 'Receive and Record Request' element complete with symbols representing knowledge resources available, along with a figurative illustration by the arrow of the effect of a click or selection on one of said resource links to access the resource itself and generate the graphical display for that resource.

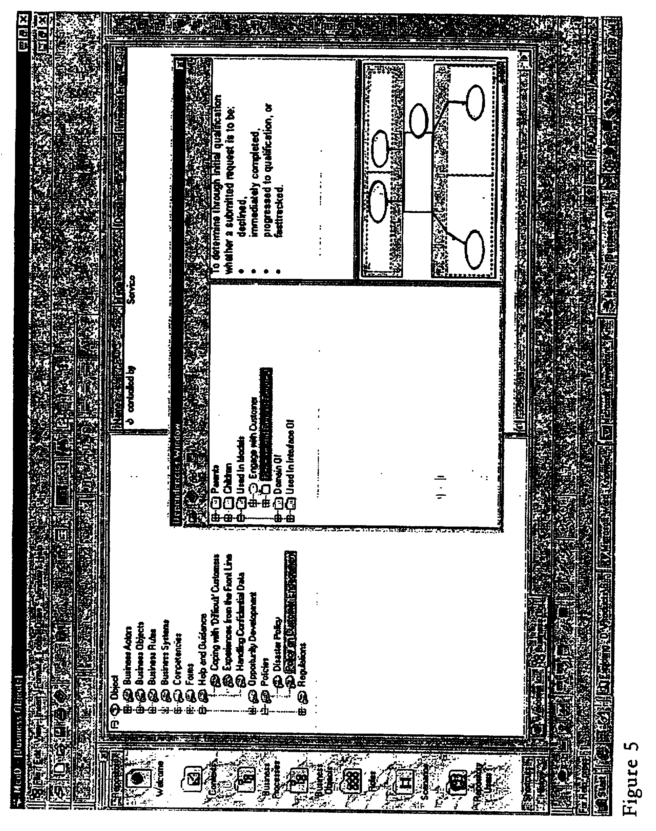

Figure 5 shows a screen display of the collection of knowledge resources as defined in the invention with a following through of the dependencies for the resources and listing the processes and/or elements that require this resource.

In the following description, an example of the method according to the invention is referred to as "Knowledge Activation". The underlying concept of Knowledge Activation is to link process models with a Knowledge Centre into which users can store and organise knowledge resources for subsequent search and retrieval through the business process models, presenting a consistent operating interface to these resources for people associated with the business workers. A preferred embodiment of Knowledge Activation is as follows:
1. A modelling team creates a set of process models representing the business using a modelling tool which generates outputs accessible via a web browser. The models include a series of elements such as the three elements "coping with difficult customers" experiences from the front line" and handling confidential data" shown in Figure 2. Each of these elements has a number of resources associated with the same and these are represented by process model symbols representing the knowledge resources (e.g. documentation, guidelines, policies and rules) that characterise and are required for, or may assist in, the delivery of these elements in the modelled business. The allocation of the resources to the elements is achieved by using dependency analysis of the resources modelling tool to audit and trace resource utilisation;
2. Those people responsible for the knowledge resources identified in step 1 organise and store these resources in a Knowledge Centre (or other accessible electronic storage), which can additionally be a distributed Knowledge Centre across many physical locations;
3. The apparatus and system of this invention, then creates a mapping between the knowledge resource symbols and the knowledge resources themselves, said mapping being stored and used to modify the collection of web pages appropriately;
4. The resulting Process Driven Knowledge Activation System is published to the user community;
5. The above 4 steps are periodically repeated in a review cycle in which the process models and resources of the Process Driven Knowledge Activation System are revised and re-published.

Thus the present invention provides a method for creating a process-based information system giving access to relevant knowledge resources at the appropriate points within a process where those knowledge resources are required. The method comprises the steps of creating a process model or models comprising one or more elements which are accessible via a web browser, associating these processes with one or more symbols representing the knowledge resources that characterise their delivery, storing and organising one or more knowledge resources which are accessible via a web browser, and generating a process-driven knowledge activation system comprising one or more knowledge resource symbols or links associated with a process model or definition which act as the user interface to the one or more knowledge resources. This method allows the rapid creation by non-technical users of process models describing the working of an organisation, the models being used as a means of accessing in context the body of organisational knowledge that distinguishes its delivery of a process from another organisation's delivery of the same process, with associated benefits in the management and traceability of a distributed, evolving body of organisational knowledge.

The invention can therefore be used on two levels, a first level is that following the selection of an element by a user, there is generated a graphical symbol or symbols representing required or helpful resources which are available to the user for that element. On the second level, the user can actually select to access one or a number of the resources by selecting the graphical symbol or symbols, and , upon selection the invention links to the resource and allows the user to access the same.

## Claims

1. A method for creating a process-driven knowledge activation system, said method comprising the following steps
- creating a process model comprising one or more elements
- associating at points within processes in said model a collection of symbols representing the resources that will be required by its user to be effective, the usage of said symbols across the model being auditable and traceable through a mechanism of dependency analysis within the modelling tool
- mapping said symbols to electronically-stored resources
- generating a process-driven knowledge activation system comprising said one or more symbols or textual representation of said symbols associated with said elements or processes linked to said resources
- said system revealing to the user, through a graphical user interface, on selecting a process, the associated resource symbols or textual representation of said symbols, the appropriate resource then being presented to the user on the selective selection of said symbol or textual representation of said symbol.

2. A method according to claim 1 wherein the process model is part of a set of general purpose graphical business models.

3. A method according to claim 1 wherein the process models are accessible via a web browser.

4. A method according to claim 1 wherein the one or more elements of the process model are provided in a tool which uniquely identifies each element and maps each element to the one or more resources.

5. A method according to claim 1 wherein the resource symbols can be queried within a tool to ascertain for each, the set of processes with a requirement of said symbol's corresponding resource, so facilitating a process of resource change management.

6. A method for creating a process-driven knowledge activation system, said method comprising the following steps:
- creating a process model of a system comprising one or more elements being part of a general purpose graphical business model, said model accessible via a web browser
- associating at points within processes in said model a collection of symbols representing the resources that will be required by its user for the element to be effected, the usage of said symbols across the model being auditable and traceable through a mechanism of dependency analysis within the modelling tool
- mapping said symbols to electronic resources stored in a file store
- generating a process-driven knowledge activation system comprising said one or more symbols or named links associated with said processes linked to said resources
said system revealing to the user, on selecting an element or process, the associated resource symbols, the appropriate resource then being presented to the user on the selective selection of said symbols or links.

7. A process model according to Claim 6 **characterised in that** the process model is illustrated on a display screen and the elements can be selected by any conventional PC based user control system.

8. A process model according to claim 6 **characterised in that** the resources are accessed by the user selection of one or more of the symbols or links representing these resources from within the process model or definition and an appropriate display is generated for any associated resource.

9. A process model according to claim 6 **characterised in that** a modeller/user follows the method to create a set of general purpose graphical business models containing various linked elements in a tool, said tool able to generate models which are accessible via a web browser and which links the resource symbols in the browser by uniquely identifying each element and its corresponding web page.

10. A process model according to claim 9 **characterised in that** the model maps knowledge resource symbols associated with a process or element that requires them, to their corresponding knowledge resources.

11. A business or process model, said model comprising a number of process model elements which in conjunction represent the model and **characterised in that** at least one of the elements is linked to a number of resources which can be selectively accessed by a user of the model and said resources linked to a particular element are made available to the user following the user choosing the particular element.

12. A model according to claim 11 **characterised in that** the model is displayed on a display screen and the user can interact with said model using a suitable control tool to select one or a number of the elements which make up the model.

13. A model according to claim 12 **characterised in that** upon selection of an element, if there are any resources linked thereto in the model, the same are represented on the display screen and thereafter selectable by the user.

14. A model according to claim 13 **characterised in that** upon selection of a resource the resource is accessed and made available for use by the user.

15. A model according to claim 14 **characterised in that** the selected resources can only be accessed by the user via the business or process model and the prior selection of an element of the same.

16. A model according to claim 11 **characterised in that** the usage of the elements and resources of the model can be traced to a particular user by the model administrator.

17. A model according to any of the preceding claims, said model graphically represented on a display screen and including a series of model elements and a series of resources, said resources, or representations thereof linked to elements and revealed to the user upon the user selecting an element, the associated resources then presented to the user for selection, and, upon selection, accessible to the user.
